# EUROPÄISCHE PATENTSCHRIFT

(11) **EP 2 193 330 B1**
(45) Veröffentlichungstag und Bekanntmachung des Hinweises auf die Patenterteilung: **04.03.2015**
(21) Anmeldenummer: 08832073.4
(22) Anmeldetag: 17.09.2008
(51) Int. Cl.: G01B 11/16, G01M 11/08

(54) **FASEROPITSCHER SENSOR ZUR MESSUNG VON VERFORMUNGEN AN WINDKRAFTANLAGEN**
FIBRE-OPTIC SENSOR FOR MEASURING DEFORMATIONS ON WIND POWER INSTALLATIONS
CAPTEUR À FIBRES OPTIQUES POUR MESURER LES DÉFORMATIONS SUR LES ÉOLIENNES

(30) Priorität: 17.09.2007 EP 07116533
(43) Veröffentlichungstag der Anmeldung: 09.06.2010
(73) Patentinhaber: Avago Technologies General IP (Singapore) Pte. Ltd, Singapore 768923 (SG)
(72) Erfinder: SCHILLING, Harry, 85072 Eichstätt (DE); POISEL, Hans, 91227 Leinburg (DE); ZIEMANN, Olaf, 90408 Nürnberg (DE); LUBER, Michael, 90765 Fürth (DE); LOQUAI, Sven, 96479 Weidach (DE)
(74) Vertreter: Dilg, Haeusler, Schindelmann Patentanwaltsgesellschaft mbH
(86) Internationale Anmeldenummer: PCT/EP2008/062343
(87) Internationale Veröffentlichungsnummer: WO 2009/037271

(56) Entgegenhaltungen:
- EP-A- 0 564 366
- DE-A1- 4 018 379
- JP-A- 4 305 111
- JP-A- 2001 183 114
- POISEL H: "POF strain sensor using phase measurement techniques" 2008, PROCEEDINGS OF SPIE - THE INTERNATIONAL SOCIETY FOR OPTICAL ENGINEERING - SMART SENSOR PHENOMENA, TECHNOLOGY, NETWORKS, AND SYSTEMS 2008 2008 SPIE US, VOL. 6933 , XP002508967 das ganze Dokument

## Beschreibung

### Technisches Gebiet

Die Erfindung betrifft einen optischen Sensor zur Messung physikalischer Parameter an technischen Bauteilen und Strukturen, insbesondere an Rotorblättern von Windkraftanlagen.

### Stand der Technik

Die DE 10 2005 0016524 zeigt eine Windkraftanlage, bei der Betriebszustände bzw. Anomalien an den Rotorblättern mittels Dehnungsmessstreifen ermittelt werden. Problematisch an elektrischen Sensoren, wie diesen Dehnungsmessstreifen ist deren Empfindlichkeit gegenüber elektrischen bzw. elektromagnetischen Störungen. So können diese durch die Entladung von elektrostatischen Aufladungen an den Rotorblättern oder auch durch Blitzeinschläge gestört oder zerstört werden.

Aus der US 4,773,753 ist ein Fasersensor bekannt, mit dem Temperaturen bzw. Dehnungen gemessen werden können. Der Sensor basiert auf einer polarisationserhaltenden Faser. Durch die äußeren Einflüsse wie Temperatur oder Dehnung verändert sich die Polarisation eines durch die Faser übertragenen Lichts. Am Ende der Faser wird die Polarisation des Lichts ausgewertet, um Rückschlüsse auf die zu messenden Größen zu erhalten.

Durch den Einsatz von optischen Sensoren kann hier eine Unabhängigkeit von elektrischen Feldern und Wellen erreicht werden. Nachteilig beim Einsatz von Sensoren basierend auf Glasfasern sind deren aufwendige Handhabung und deren hohe mechanische Empfindlichkeit. Weiterhin haben die auf der Auswertung von Polarisationsänderung basierten Sensoren häufig nur eine geringe Auflösung bzw. Genauigkeit.

Problematisch an dieser Art von Sensoren, die mehrere Messgrößen wie Temperatur und Dehnung gleichzeitig messen können, ist auch die Unterscheidung, von welcher Messgröße das Messsignal erzeugt wurde. Wird beispielsweise eine Polarisationsänderung erkannt, so kann nicht eindeutig festgestellt werden, ob diese durch eine Veränderung der Länge der Faser oder durch eine Änderung der Temperatur hervorgerufen wurde.

Eine höhere Auflösung bietet ein auf einem Bragg-Gitter basierender Sensor, wie er in der US 7,027,672 B2 offenbart ist. Nachteilig daran ist die typischerweise niedrige Bandbreite der Auswerteeinheit, so dass nur langsame Messungen im Bereich von wenigen Hertz möglich sind. Zudem ist die Auswerteeinheit sehr aufwendig und kostenintensiv.

Die EP 0564366 A1 beschreibt einen optischen Fasersensor zur Messung einer Verformung in einem mechanischen Bauteil mit einer Messfaser und einer Referenzfaser wobei die Referenzfaser alternativ durch eine elektrische Verbindung gebildet sein kann.

### Darstellung der Erfindung

Der Erfindung liegt die Aufgabe zugrunde, einen optischen Sensor zur Erfassung von Verformungen an mechanischen Bauteilen, insbesondere an Rotorblättern von Windkraftanlagen bereitzustellen, der die Nachteile des Standes der Technik vermeidet und insbesondere mit verbesserter Genauigkeit und Auflösung eine Dehnungsmessung erlaubt, wobei Temperatureinflüsse weitgehend kompensiert sein sollen. Der Sensor soll eine relativ hohe Bandbreite im Kilohertzbereich aufweisen, robust aufgebaut und einfach sowie kostengünstig herstellbar sein. Weiterhin soll der Sensor auch mit sichtbarem Licht betreibbar sein.

Eine erfindungsgemäße Lösung dieser Aufgabe ist in den unabhängigen Patentansprüchen angegeben. Weiterbildungen der Erfindung sind Gegenstand der abhängigen Ansprüche.

Ein optischer Fasersensor entsprechend der Erfindung dient zur temperaturkompensierten Messung einer mechanischen Verformung in einem mechanischen Bauteil. Ein solches mechanisches Bauteil ist insbesondere das Rotorblatt 5 eine Windkraftanlage 1. Entsprechend der Windlast verformen sich die Rotorblätter. Durch Messung der Verformung der Rotorblätter kann auf den Lastzustand oder auf andere Zustände der Rotorblätter, wie beispielsweise eine Vereisung geschlossen werden. Um nun die Verformung eines mechanischen Bauteils wie beispielsweise eines Rotorblatts zu messen, sind eine erste Messfaser 10 und eine zweite Messfaser 11 an dem Bauteil angebracht. Hierbei ist insbesondere die erste Messfaser 10 an zumindest zwei Punkten mit dem mechanischen Bauteil verbunden, so dass eine mechanische Verformung des mechanischen Bauteils 5 zu einer Längenänderung der ersten Messfaser 10 führt. Die zweite Messfaser 11 ist derart mit dem mechanischen Bauteil 5 verbunden, dass die Verformung des mechanischen Bauteils zu einer anderen Längenänderung als in der Messfaser 10 führt. So kann die zweite Messfaser 11 auch lose an dem mechanischen Bauteil 5 angebracht sein, so dass eine Verformung des Bauteils 5 zu keiner Längenänderung der zweiten Messfaser 11 führt. Die beiden Messfasern 10, 11 werden durch einen ersten optischen Sender 14, moduliert mit einer Modulationsfrequenz aus einem Signalgenerator 33 mit einem Messsignal, gespeist. Um das Signal des Senders auf die beiden Messfasern aufzuteilen, ist zwischen dem ersten optischen Sender 14 und den beiden Messfasern 10, 11 ein erster Y-Koppler 21 vorgesehen. Das optische Messsignal aus der ersten Messfaser 10 wird einem ersten optischen Empfänger 19 und das optische Messsignal der zweiten Messfaser 11 wird einem zweiten optischen Empfänger 20 zugeführt. Neben diesem hier beschriebenen Messsignalpfad gibt es einen Referenzsignalpfad. So wird eine erste Referenzfaser 12 und einer Referenzfaser 13 mit einem optischen Referenzsignal gespeist. Dieses optische Referenzsignal wird je nach Ausführung durch Mittel 15, 17, 18, 23 zur Erzeugung eines optischen Referenzsignals erzeugt und mit einer Modulationsfrequenz aus dem Signalgenerator 33 moduliert. Die erste Referenzfaser 12 und die zweite Referenzfaser 13 weisen unterschiedliche Längen auf. Die Signale aus diesen Fasern werden dann dem ersten optischen Empfänger 19 bzw. dem zweiten optischen Empfänger 20 zugeführt und ebenso wie die Signale des Messpfades in einer Auswerteeinheit vorzugsweise umfassend einen Phasenkomparator 30, einen Analog/Digital-Wandler 31 sowie einen Mikrocontroller 32 ausgewertet. Erfindungsgemäß werden als Messfasern und als Referenzfasern bevorzugt Plastikfasern (POF) eingesetzt. Grundsätzlich sind aber auch andere lichtleitende Fasern einsetzbar. Um mechanische Einflüsse zu minimieren ist der erste Y-Koppler 21 möglichst nahe an den Messfasern 10, 11 angebracht und möglichst mechanisch fest und somit schwingungsfrei mit dem mechanischen Bauteil 5 verbunden.

Zur Auswertung der Signale wird eine erste Phasendifferenz zwischen den beiden Signalen aus der ersten Messfaser 10 und der zweiten Messfaser 11 ermittelt. Diese Phasendifferenz ist ein Maß für die Längendifferenz, verursacht durch die Verformung der Fasern und somit ein Maß für die Verformung des mechanischen Bauteils. Vorzugsweise sind die erste Messfaser 10 und die zweite Messfaser 11 thermisch miteinander verkoppelt, so dass Temperaturänderungen zu keiner zusätzlichen Phasenänderung des Lichtes führen. Durch den Vergleich der Messungen aus den Messfasern und den Referenzfasern können die Toleranzen der übrigen an der Messung beteiligten Bauteile wie Sender 14, Empfänger 19, 20 sowie der Auswerteeinheit (30, 31, 32) kompensiert werden. Es kann auch noch die Temperaturabhängigkeit des Brechungsindex der Fasern und damit der Phasenänderung als Funktion der Längenänderung der Fasern kompensiert werden. Aufgrund der unterschiedlichen bekannten Längen der Referenzfasern ergibt sich eine Phasendifferenz, abhängig von der Temperatur. Weisen nun die Messfasern und die Referenzfasern näherungsweise dieselbe Temperatur auf, so kann ein Messerwert für eine Längenänderung durch Quotientenbildung dieser beiden Phasendifferenzen errechnet werden. Der abschließend ausgegebene Messwert wird noch entsprechend der Skalierungsfaktoren und Nullpunkte der Messanordnung aufbereitet. Durch diese Kompensation ist ein einfacher und kostengünstiger Aufbau mit Standardkomponenten möglich.

Besonders günstig ist es, einen analogen Phasenkomparator mit nachgeschaltetem Analog/Digital-Wandler einzusetzen. Selbstverständlich kann aber auch ein digitaler Phasenkomparator verwendet werden.

Vorteilhaft ist es, wenn die Messfasern 10, 11 derart mit dem mechanischen Bauteil 5 verbunden sind, dass bei einer Verformung des mechanischen Bauteils 5 die Längenänderungen der Messfasern in entgegengesetzter Richtung verlaufen. Dies bedeutet beispielsweise, dass bei einer Verformung des mechanischen Bauteils 5 in eine erste Richtung die erste Messfaser 10 in ihrer Länge verkürzt und die zweite Messfaser 11 in ihrer Länge vergrößert wird.

In einer weiteren Ausgestaltung der Erfindung sind separate optische Referenzempfänger für die Signale der ersten Referenzfaser 12 und der zweiten Referenzfaser 13 vorgesehen. Weiterhin ist es vorteilhaft, wenn ein getrennter Phasenkomparator zur Auswertung der Referenzsignale vorgesehen ist.

In einer weiteren Ausgestaltung der Erfindung kann anstelle eines optischen Referenzpfades auch ein elektrischer Referenzpfad vorgesehen werden. In diesem Falle wird ein elektrisches Signal des Signalgenerators 33 über zwei Leitungen unterschiedlicher Länge an dem Phasenkomparator 30 weitergeleitet. Hiermit ist zumindest eine Kalibrierung des Phasenkomparators möglich. Die Temperaturabhängigkeit der Senderempfindlichkeit kann hiermit dann nicht mehr kalibriert werden.

In einer weiteren vorteilhaften Ausgestaltung der Erfindung sind anstelle eines ersten optischen Senders 14 mit nachgeschaltetem Y-Koppler 21 zwei optische Sender vorgesehen, die vorzugsweise mit dem gleichen elektrischen Signal gespeist werden.

Eine weitere Ausgestaltung der Erfindung sieht vor, dass das optische Referenzsignal eine andere Modulationsfrequenz als das optische Messsignal aufweist. In diesem Falle hat der Signalgenerator 33 wenigstens zwei Ausgänge mit unterschiedlichen Modulationssignalen, wobei ein erster Ausgang einen ersten optischen Sender 14 und ein zweiter Ausgang einen zweiten optischen Sender 15 ansteuert.

Das Modulationssignal kann verschiedene Kurvenformen haben. Besonders vorteilhaft ist beim Einsatz eines analogen Phasenkomparators eine sinusförmige Kurvenform. Beim Einsatz digitaler Phasenkomparatoren empfiehlt sich eine rechteckförmige Kurvenform.

In einer weiteren vorteilhaften Ausgestaltung wird für die Messung der Referenzfasern eine andere, bevorzugt eine höhere Frequenz als zur Messung mit den Messfasern verwendet. Bevorzugte Messfrequenzen sind beispielsweise für die Referenzfasern 2 GHz und für die Messfasern 0.5 GHz. Insbesondere bei den Messfasern muss die Modulationsfrequenz des optischen Senders an die Faserlänge angepasst werden. So muss mit zunehmender Faserlänge die Modulationsfrequenz reduziert werden. Eine höhere Modulationsfrequenz ermöglicht aber eine höhere Auflösung. Daher wird die Messung mit den kurzen Referenzfasern bevorzugt bei einer höheren Frequenz durchgeführt. Mit einer höheren Messfrequenz kann grundsätzlich auch eine höhere Auflösung bzw. eine höhere Genauigkeit erreicht werden.

Um Wartungsarbeiten und die Montage bzw. Justage des Systems besonders einfach zu gestalten, weist das optische Referenzsignal bzw. das optische Messsignal eine Wellenlänge im sichtbaren Bereich, vorzugsweise rot auf.

Ein weiterer Gegenstand der Erfindung ist eine Windkraftanlage, umfassend einen optischen Fasersensor nach einem der vorhergehenden Ansprüche, mit dem die Verformung wenigstens eines Rotorblatts gemessen wird.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt einen erfindungsgemäßen optischen Fasersensor.
Fig. 2 zeigt eine weitere Ausgestaltung der Erfindung mit einem optischen Schalter im Referenzpfad.
Fig. 3 zeigt eine weitere Ausgestaltung der Erfindung mit einem zweiten optischen Sender zur Erzeugung des Referenzsignales.
Fig. 4 zeigt eine Windkraftanlage.
Fig. 5 zeigt eine Draufsicht auf die Windkraftanlage im Schnitt A-A.
Fig. 6 zeigt ein Rotorblatt mit Fasersensor in der Seitenansicht.
Fig. 7 zeigt ein Rotorblatt mit Fasersensor im Schnitt.
Fig. 8 zeigt eine Sensoranordnung in allgemeiner Form
Fig. 9 zeigt einen Sensor mit Ortsauflösung
Fig. 10 zeigt einen Sensor mit erhöhter Auflösung
Fig. 11 zeigt einen Sensor für Querkräfte mit Ortsauflösung
Fig. 12 zeigt einen Sensor zur Erfassung der Querrichtung
Fig. 13 zeigt einen Sensor zur Torsionsmessung

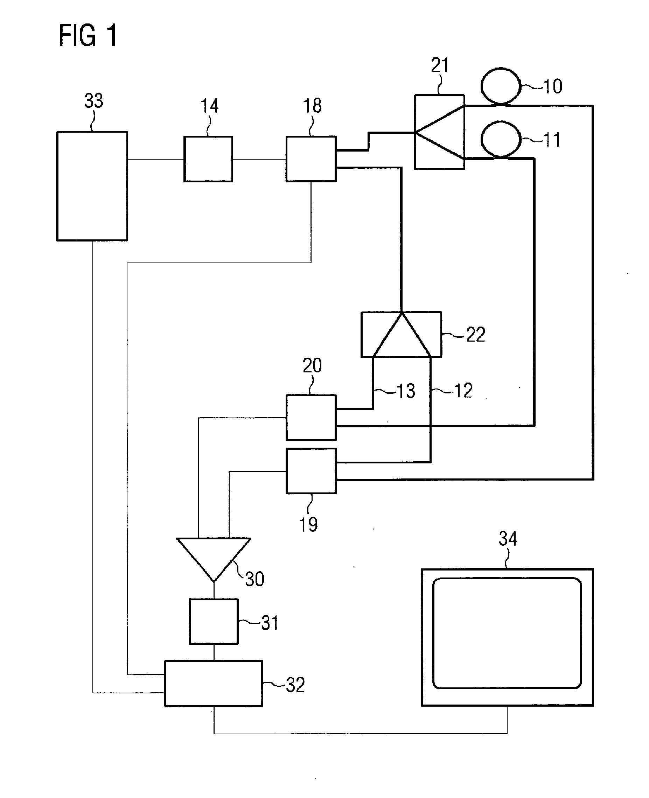

In Fig. 1 ist ein erfindungsgemäßer optischer Fasersensor dargestellt. Ein Signalgenerator 33 erzeugt zwei Signale zur Modulation eines ersten optischen Senders 14. Das Ausgangssignal des ersten optischen Senders 14 wird über einen optischen Umschalter 18 wahlweise einem ersten Y-Koppler 21 für den Messpfad oder einen zweiten Y-Koppler 22 für den Referenzpfad zugeführt. Der erste Y-Koppler 21 teilt das Signal in zwei Teile für eine erste Messfaser 10 sowie eine zweite Messfaser 11 auf. Diese beiden Messfasern sind bevorzugt mit einem mechanischen Bauteil derart verbunden, dass diese sich entgegengesetzt verformen und dabei eine näherungsweise gleiche Temperatur aufweisen. Das Ausgangssignal der ersten Messfaser 10 wird einem ersten optischen Empfänger 19 und das Ausgangssignal der zweiten Messfaser 11 einem zweiten optischen Empfänger 20 zugeführt. Die Ausgangssignale der beiden optischen Empfänger werden mittels eines Phasenkomparators 30 verglichen. Die Phasendifferenz wird mittels eines Analog/DigitalWandlers 31 in einen digitalen Messwert umgesetzt und mittels eines Mikrocontrollers 32 weiter verarbeitet. Zur Erzeugung eines Referenzsignals wird mit einem optischen Umschalter 18 zwischen dem ersten optischen Sender 14 und dem ersten Y-Koppler 21 das Signal des Messpfads in den Referenzpfad umgeschaltet. Dieser optische Umschalter 18 wird vorzugsweise durch den Mikrocontroller 32 gesteuert. Das Ausgangssignal des Umschalters 18 für den Referenzpfad wir über den zweiten Y-Koppler 22 an die erste Referenzfaser 12 und die zweite Referenzfaser 13 abgegeben. Die beiden Referenzfasern 12, 13 weisen bekannte, vorzugsweise unterschiedliche Längen auf. Aufgrund der bekannten Längendifferenz ergibt sich eine bekannte Phasendifferenz des Signals. Das Licht aus diesen Referenzfasern wird ebenfalls in den ersten optischen Empfänger 19 bzw. den zweiten optischen Empfänger 20 zur Auswertung durch den Phasenkomparator übergeben. Der Mikrocontroller 32 kann aus einer Verhältnisbildung der Phasendifferenzen des Signals der Messfasern und des Signals der Referenzfasern einen relativ exakten Messwert für die Längenänderung der Messfasern ermitteln.

Alternativ könnten zur Messung der Messfasern 10, 11 und zur Messung der Referenzfasern 12, 13 durch den Signalgenerator 33 unterschiedliche Modulationsfrequenzen vorgegeben werden. Weiterhin kann der Phasenkomparator 30 in seinem Inneren zwei Phasenkomparatoren mit frequenzselektiven Eigenschaften zur Messung der Phasendifferenz bei den unterschiedlichen Modulationsfrequenzen aufweisen.

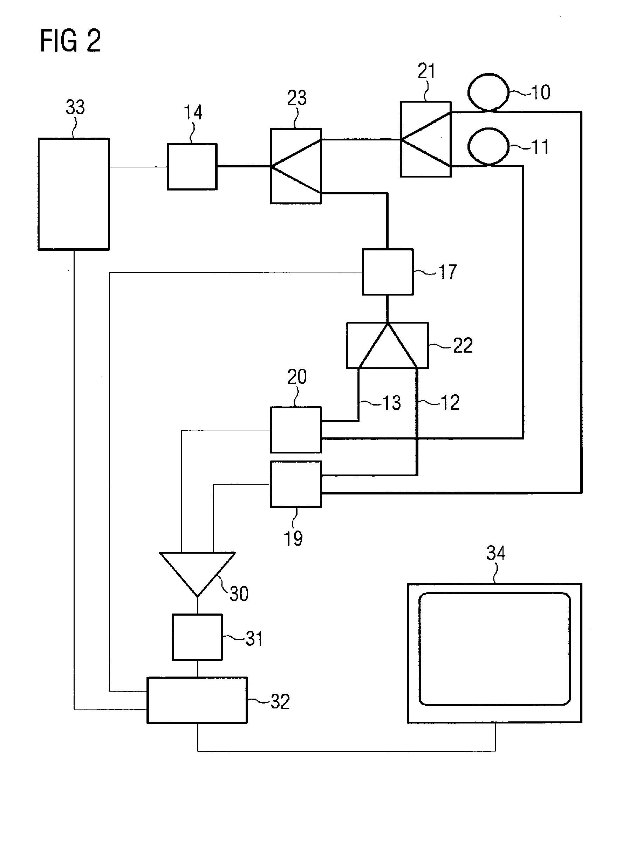

In Fig. 2 ist eine andere Ausgestaltung der Erfindung mit einem optischen Schalter im Referenzpfad offenbart. Das Ausgangssignal des ersten optischen Senders 14 wird über einen dritten Y-Koppler 23 in ein erstes Signal für den Messpfad, welches über den ersten Y-Koppler 21 der ersten Messfaser 10 und der zweiten Messfaser 11 zugeführt wird, sowie ein zweites Signal für den Referenzpfad aufgespaltet. Dieses Signal für den Referenzpfad wird mittels eines optischen Schalters 17 ein- bzw. ausgeschaltet und über einen zweiten Y-Koppler 22 der ersten Referenzfaser 12 und der zweiten Referenzfaser 13 zugeführt. Diese Ausgestaltung empfängt mit den Empfängern 19, 20 bei eingeschaltetem Schalter 17 gleichzeitig Signale aus den Referenzfasern und aus den Messfasern. Typischerweise sind die Referenzfasern wesentlich kürzer als die Messfasern und damit dämpfungsärmer und breitbandiger. Das typische Längenverhältnis zwischen Referenzfasern und Messfasern liegt in einem Bereich von 1:10 bis 1:10000. Bei hoher Signaldämpfung durch die Messfasern kann bei eingeschaltetem Schalter 17 das Referenzsignal gut ausgewertet werden. Auch hier kann eine Selektion mit unterschiedlichen Modulationsfrequenzen erfolgen. Da die Messfasern aufgrund ihrer Länge wesentlich schmalbandiger sind, kann bei eingeschaltetem Schalter 17 ein Signal mit höherer Modulationsfrequenz vom Sender 14 abgegeben werden. Dieses Signal kann dann zwar von den kurzen Referenzfasern, aber nicht mehr von den längeren Messfasen übertragen werden. Ein typisches Verhältnis zwischen der Frequenz zur Messung der Messfasern und der Frequenz zur Messung der Referenzfasern liegt in einem Bereich von 1:10 bis 1:100.

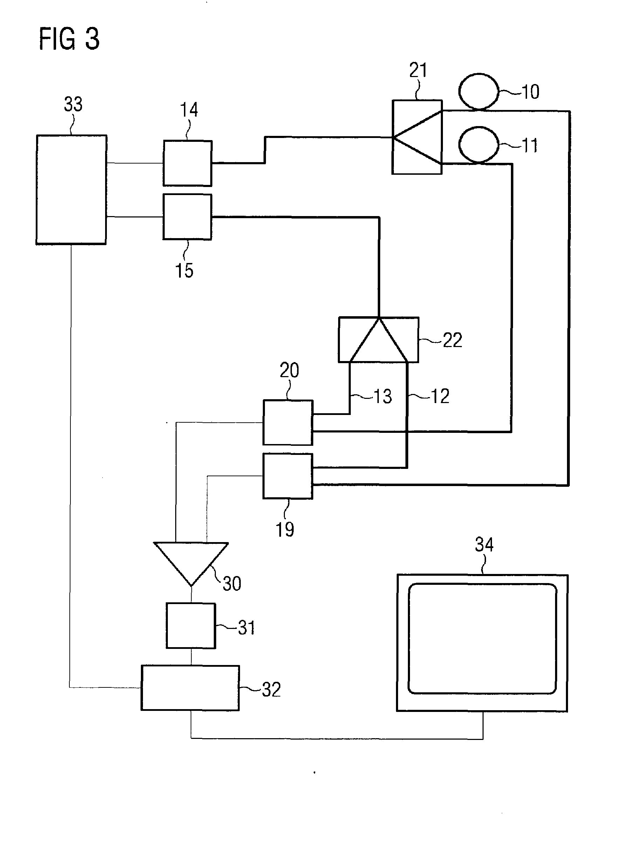

In Fig. 3 ist eine weitere Ausgestaltung der Erfindung mit einem zweiten optischen Sender 15 zur Erzeugung eines optischen Referenzsignals offenbart. Hier kann dann der Umschalter 18 entfallen. Vorteilhafterweise werden die Signale vom ersten optischen Sender 14 und vom zweiten optischen Sender 15 zeitlich versetzt abgegeben, so dass der Phasenkomparator 30 jeweils nur die Signale aus den Messfasern oder die Signale aus den Referenzfasern erhält. Alternativ könnten der erste optische Sender 14 und der zweite optische Sender 15 mit unterschiedlichen Frequenzen moduliert werden.

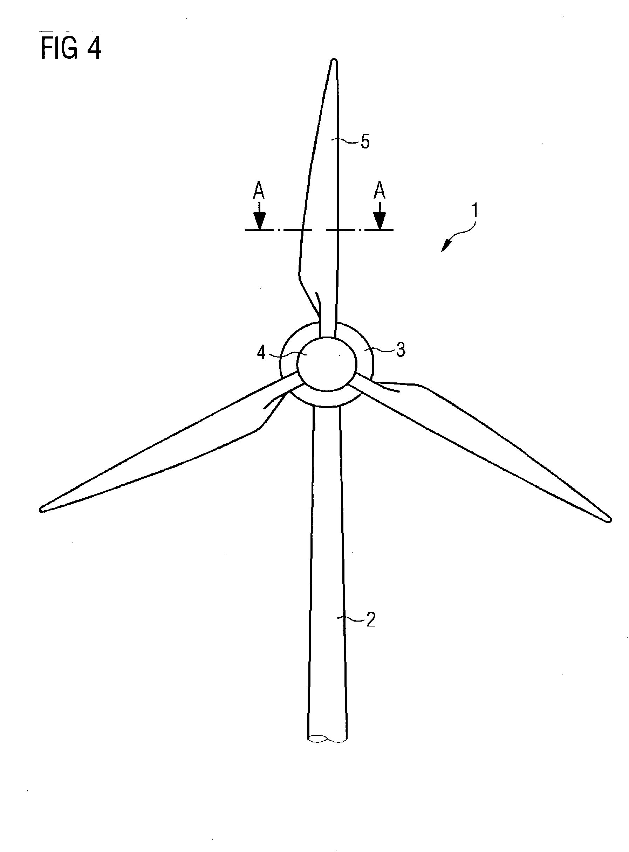

In Fig. 4 ist eine Windkraftanlage entsprechend der Erfindung dargestellt. Auf dem Turm 2 ist eine Gondel 3 angeordnet. Sie weist eine Rotornabe 4 zur Aufnahme der Rotorblätter 5 auf.

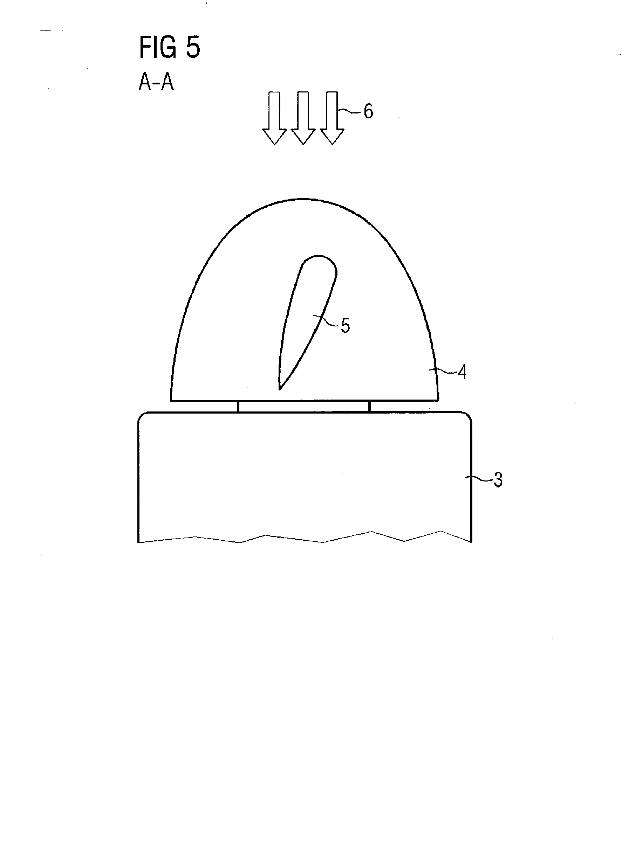

Fig. 5 zeigt eine Draufsicht auf die Gondel im Schnitt. So ist hier von oben die Gondel 3 und die Rotornabe 4 zu erkennen. Das Rotorblatt ist an dem markierten Schnitt A-A geschnitten dargestellt. Typischerweise kann das Rotorblatt in seinem Winkel gegenüber dem Wind 6 verstellt werden.

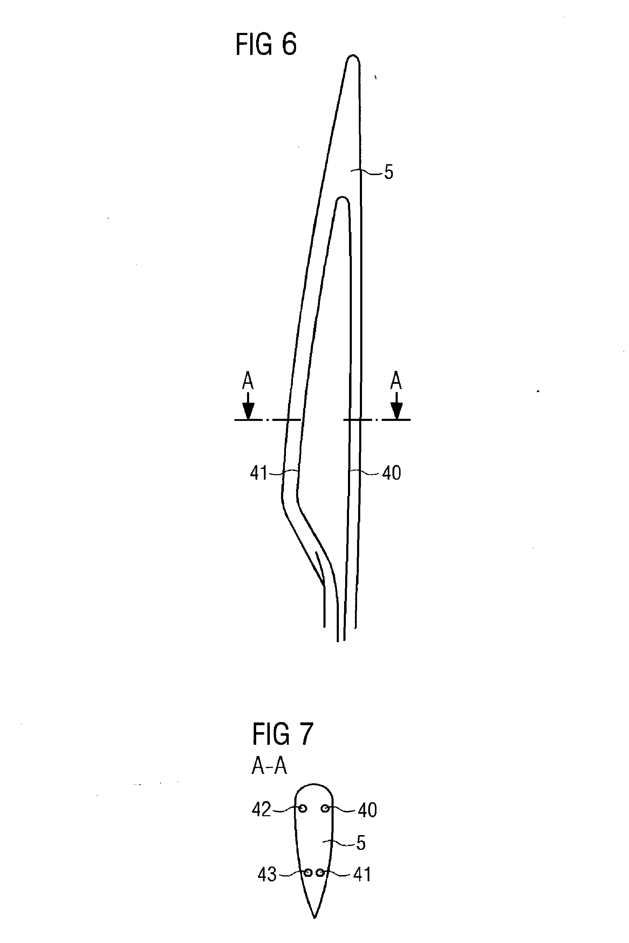

In Fig. 6 ist erfindungsgemäßes Rotorblatt mit Fasersensor in der Seitenansicht dargestellt. Es ist hier die erste Messfaser 10 dargestellt, welche schleifenförmig nahe der Oberseite des Rotorblatts 5 angeordnet ist. Hier kann beispielsweise die erste Seite 40 mit dem ersten Y-Koppler 21 verbunden sein, während die zweite Seite 41 mit dem ersten optischen Empfänger 19 verbunden ist.

In Fig. 7 ist ein erfindungsgemäßes Rotorblatt mit Fasersensor im Schnitt dargestellt. Auf der einen Seite des Rotorblatts ist die erste Messfaser 10 geschnitten mit den teilen 40 und 41 aus Fig. 6 dargestellt. Die zweite Messfaser 11 mit den Teilen 40 und 41 ist dieser gegenüberliegend angeordnet. Wird nun beispielsweise durch Windkraft das Rotorblatt in der Ansicht dieser Zeichnung nach links gebogen, so wird die Länge der ersten Messfaser 10 zwischen den Punkten 40 und 41 vergrößert, während die Länge der zweiten Messfaser 11 zwischen den Punkten 42 und 43 verringert wird.

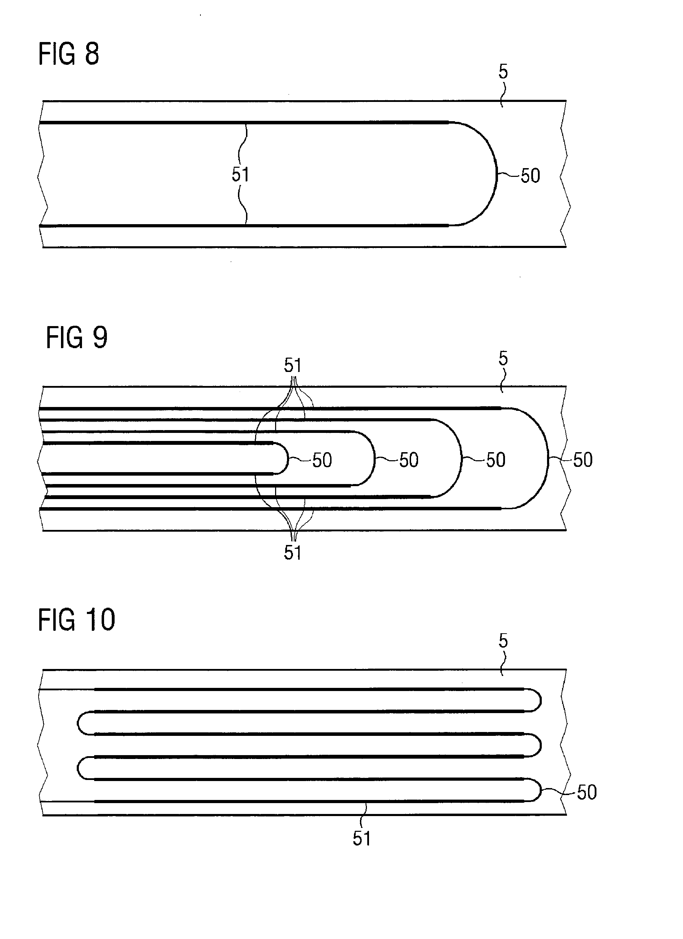

Die Figuren 8 bis 13 zeigen verschiedene Sensoranordnungen der Lichtleiter 10, 11. Die Faser weist hier wenigstens ein Zuleitungssegment 50 und ein Sensorsegment 51 auf. Das Zuleitungssegment 50 ist lose, d.h. mechanisch entkoppelt an dem mechanischen Bauteil 5 befestigt und wird daher nicht durch eine Verformung des mechanischen Bauteils 5 verformt. Das Sensorsegment 51 ist wenigstens an zwei Punkten, bevorzugt an dessen Endpunkten, besonders bevorzugt an dessen gesamter Länge mit dem mechanischen Bauteil verbunden, so dass durch einen Verformung des mechanischen Bauteils eine Längenänderung in dem Sensorsegment 51 auftritt. Eine entsprechende Anordnung kann beispielsweise durch Verlegen einer Faser realisiert werden, indem die Faser im Bereich eines Zuleitungssegments 50 lose verlegt und im Bereich eines Sensorsegment 51 fest mit dem mechanischen Bauteil 5 verklebt wird. Es können aber auch verschiedene Faserstücke in den jeweiligen Segmenten miteinander verbunden werden.

Eine Sensoranordnung in allgemeiner Form ist in Fig. 8 dargestellt. Hierbei ist zumindest einer der Lichtleiter 10, 11 oder auch beide Lichtleiter entsprechend angeordnet.

Der Sensor in Fig. 9 umfasst mehrere voneinander getrennte Lichtleiter entsprechend mehreren Lichtleitern 10, so dass sich mehrere Sensorkreise ergeben. Diese können dann durch mehrere Auswerteeinrichtungen ausgewertet oder durch Umschalter an einer Auswerteeinrichtung umgeschaltet werden. Hier können Messungen an verschiedenen Orten vorgenommen werden.

Bei dem Sensor in Fig. 10 wird die Auflösung durch Zusammenschaltung mehrerer Sensorsegmente 51 erhöht.

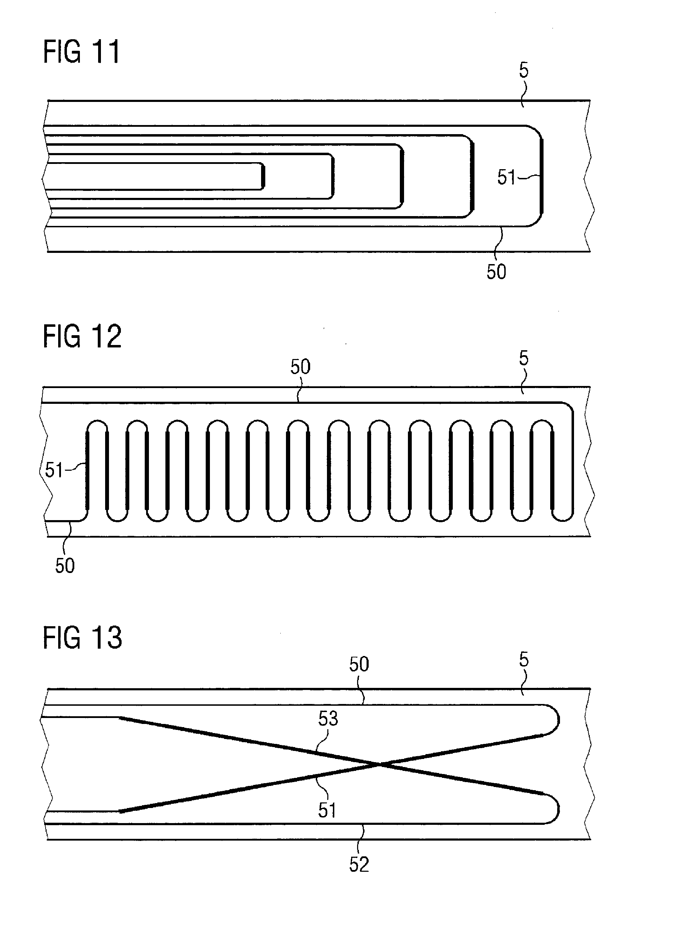

Der Sensor nach Fig. 11 erlabt die Messung von Kräften in Querrichtung an verschiedenen Orten analog dem Sensor mit Ortsauflösung aus Fig. 9.

Fig. 12 zeigt einen Sensor mit hoher Auflösung bei Querkräften durch die Parallelschaltung mehrerer Sensorsegmente 53.

In Fig 13 ist ein Sensor zur Torsionsmessung offenbart, wie er besonders vorteilhaft in Windkraftanlagen eingesetzt werden kann. Hier weist beispielsweise eine erste Messfaser 10 ein erstes Zuleitungssegment 50 und ein erstes Sensorsegment 51 auf. Die zweite Messfaser 11 hat ein zweites Zuleitungssegment 52 und ein zweites Sensorsegment 53. Durch die Anordnung der Messsegmente kann nun eine Torsion des mechanischen Bauteils 5 gemessen werden.

### Bezugszeichenliste

- 1: Windkraftanlage
- 2: Turm
- 3: Gondel
- 4: Rotornabe
- 5: Rotorblatt
- 6: Wind
- 10: erste Messfaser
- 11: zweite Messfaser
- 12: erste Referenzfaser
- 13: zweite Referenzfaser
- 14: erster optischer Sender
- 15: zweiter optischer Sender
- 17: optischer Schalter
- 18: optischer Umschalter
- 19: erster optischer Empfänger
- 20: zweiter optischer Empfänger
- 21: erster Y-Koppler
- 22: zweiter Y-Koppler
- 23: dritter Y-Koppler
- 30: Phasenkomparator
- 31: Analog/Digital - Wandler
- 32: Mikrocontroller
- 33: Signalgenerator
- 34: Anzeigeeinrichtung
- 40/41: erster Lichtwellenleiter
- 42/43: zweiter Lichtwellenleiter
- 50: Zuleitungssegment
- 51: Messsegment
- 52: Zuleitungssegment im zweiten Signalzweig
- 53: Messsegment im zweiten Signalzweig

## Patentansprüche

1. Optischer Fasersensor zur temperaturkompensierten Messung einer Verformung in einem mechanischen Bauteil (5), umfassend
- eine erste Messfaser (10), welche an zumindest zwei Punkten mit dem mechanischen Bauteil (5) verbunden ist und zusammen mit dem mechanischen Bauteil (5) zumindest teilweise in ihrer Länge verändert wird,
- eine zweite Messfaser (11), welche entweder lose an dem mechanischen Bauteil (5) angebracht ist oder an zumindest zwei Punkten mit dem mechanischen Bauteil (5) verbunden ist und zusammen mit dem mechanischen Bauteil (5) zumindest teilweise in ihrer Länge verändert wird,
- einen ersten optischen Sender (14), gespeist von einem Signalgenerator (33), der ein Modulationssignal mit einer Modulationsfrequenz erzeugt, mit nachgeschaltetem Y-Koppler (21) zur Einspeisung eines optischen Messsignals in die erste Messfaser (10) und in die zweite Messfaser (11),
- einen ersten optischen Empfänger (19) zum Empfang des durch die erste Messfaser (10) geführten optischen Messsignals,
- einen zweiten optischen Empfänger (20) zum Empfang des durch die zweite Messfaser (11) geführten optischen Messsignals,
- Mittel (15, 17, 18, 23) zur Erzeugung eines optischen Referenzsignals mit nachgeschaltetem Y-Koppler (22) zur Einspeisung des optischen Referenzsignals in eine erste Referenzfaser (12) und in eine zweite Referenzfaser (13), wobei die erste Referenzfaser (12) und die zweite Referenzfaser (13) unterschiedliche Längen haben und die Ausgangssignale der ersten Referenzfaser (12) einem ersten optischen Referenzempfänger (19) und der zweiten Referenzfaser (13) einem zweiten optischen Referenzempfänger (20) zugeführt werden, und
- eine Auswerteeinheit (30, 31, 32), die eine erste Phasendifferenz aus den Signalen des ersten optischen Empfängers (19) und des zweiten optischen Empfängers (20) unter Einspeisung von Messsignalen aus den Messfasern (10, 11) sowie eine zweite Phasendifferenz unter Einspeisung von Referenzsignalen aus den Referenzfasern (12, 13) ermittelt und aus der ersten Phasendifferenz und der zweiten Phasendifferenz einen Messwert ermittelt und ausgibt.

2. Optischer Fasersensor nach Anspruch 1, wobei die Messfasern (10, 11) und die Referenzfasern (12, 13) thermisch miteinander gekoppelt sind und/oder näherungsweise die gleiche Temperatur aufweisen.

3. Optischer Fasersensor nach einem der vorhergehenden Ansprüche, wobei die erste Messfaser (10) und die zweite Messfaser (11) näherungsweise die gleiche Länge aufweisen.

4. Optischer Fasersensor nach einem der vorhergehenden Ansprüche, wobei die erste Referenzfaser (12) und die zweite Referenzfaser (13) eine vorgegebene Längendifferenz aufweisen.

5. Optischer Fasersensor nach einem der vorhergehenden Ansprüche, wobei der erste optische Empfänger (19) auch der erste optische Referenzempfänger (19) ist, und der zweite optische Empfänger (20) auch der zweite optische Referenzempfänger (20) ist.

6. Optischer Fasersensor nach einem der vorhergehenden Ansprüche, wobei zur Erzeugung des optischen Referenzsignals ein zweiter optischer Sender (15) vorgesehen ist.

7. Optischer Fasersensor nach einem der vorhergehenden Ansprüche, wobei das optische Referenzsignal eine andere Modulationsfrequenz als das optische Messsignal aufweist.

8. Optischer Fasersensor nach einem der vorhergehenden Ansprüche, wobei das Modulationssignal für das optische Referenzsignal und das optische Messsignal eine sinusförmige oder rechteckförmige Kurvenform aufweist.

9. Optischer Fasersensor nach einem der vorhergehenden Ansprüche, wobei das optische Referenzsignal und/oder das optische Messsignal eine Wellenlänge im sichtbaren Bereich aufweist.

10. Optischer Fasersensor zur temperaturkompensierten Messung einer Verformung in einem mechanischen Bauteil (5), umfassend
- eine erste Messfaser (10), welche an zumindest zwei Punkten mit dem mechanischen Bauteil (5) verbunden ist und zusammen mit dem mechanischen Bauteil (5) zumindest teilweise in ihrer Länge verändert wird,
- eine zweite Messfaser (11), welche entweder lose an dem mechanischen Bauteil (5) angebracht ist oder an zumindest zwei Punkten mit dem mechanischen Bauteil (5) verbunden ist und zusammen mit dem mechanischen Bauteil (5) zumindest teilweise in ihrer Länge verändert wird,
- einen ersten optischen Sender (14), gespeist von einem Signalgenerator (33), der ein Modulationssignal mit einer Modulationsfrequenz erzeugt, mit nachgeschaltetem Y-Koppler (21) zur Einspeisung eines optischen Messsignals in die erste Messfaser (10) und in die zweite Messfaser (11),
- einen ersten optischen Empfänger (19) zum Empfang des durch die erste Messfaser (10) geführten optischen Messsignals,
- einen zweiten optischen Empfänger (20) zum Empfang des durch die zweite Messfaser (11) geführten optischen Messsignals,
- eine elektrische Verbindung mit zwei unterschiedlich langen elektrischen Leitungen zwischen dem Signalgenerator (33) und einer Auswerteeinheit (30, 31,32) vorgesehen ist, und
- eine Auswerteeinheit (30, 31, 32), die eine erste Phasendifferenz aus den Signalen des ersten optischen Empfängers (19) und des zweiten optischen Empfängers (20) unter Einspeisung von Messsignalen aus den Messfasern (10, 11) sowie eine zweite Phasendifferenz unter Einspeisung von Referenzsignalen aus der elektrischen Verbindung ermittelt und aus der ersten Phasendifferenz und der zweiten Phasendifferenz einen Messwert ermittelt und ausgibt.

11. Optischer Fasersensor nach einem der vorhergehenden Ansprüche, wobei die Messfasern (10, 11) derart mit dem mechanischen Bauteil (5) verbunden sind, dass bei einer Verformung des mechanischen Bauteils (5) die Längenänderungen der Messfasern (10, 11) entgegengesetzt verlaufen.

12. Windkraftanlage umfassend einen optischen Fasersensor nach einem der vorhergehenden Ansprüche zur Messung der Verformung wenigstens eines Rotorblatts.

## Claims

1. Optical fiber sensor for temperature compensated measurement of a deformation in a mechanical component (5), comprising
a first measurement fiber (10) which is connected at least at two points with the mechanical component (5) and is at least partially modified together with the mechanical component (5) in its length,
a second measurement fiber (11) which is either attached loosely to the mechanical component (5) or is connected at least at two points with the mechanical component (5) and is at least partially modified together with the mechanical component (5) in its length,
a first optical transmitter (14), fed from a signal generator (33) which generates a modulation signal with a modulation frequency, with downstream Y-coupler (21) for feeding of an optical measurement signal into the first measurement fiber (10) and into the second measurement fiber (11),
a first optical receiver (19) for reception of the measurement signal guided through the first measurement fiber (10),
a second optical receiver (20) for reception of the measurement signal guided through the second measurement fiber (11),
means (15, 17, 18, 23) for generation of an optical reference signal with downstream Y-coupler (22) for feeding of the optical reference signal into a first reference fiber (12) and into a second reference fiber (13),
wherein the first reference fiber (12) and the second reference fiber (13) have different lengths and the output signals of the first reference fiber (12) are fed to a first optical reference receiver (19) and of the second reference fiber (13) are fed to a second optical reference receiver (20), and
an evaluation unit (30, 31, 32)
which determines a first phase difference from the signals of the first optical receiver (19) and of the second optical receiver (20) while feeding measurement signals of the measurement fibers (10, 11),
which determines as well a second phase difference while feeding reference signals of the reference fibers (12, 13) and
which determines and outputs a measurement value from the first phase difference and the second phase difference.

2. Optical fiber sensor according to claim 1, wherein the measurement fibers (10, 11) and the reference fibers (12, 13) are coupled thermally with each other and/or comprise approximately the same temperature.

3. Optical fiber sensor according to one of the preceding claims, wherein the first measurement fiber (10) and the second measurement fiber (11) comprise approximately the same length.

4. Optical fiber sensor according to one of the preceding claims, wherein the first reference fiber (12) and the second reference fiber (13) comprise a predetermined length difference.

5. Optical fiber sensor according to one of the preceding claims, wherein the first optical receiver (19) is also the first optical reference receiver (19), and the second optical receiver (20) is also the second optical reference receiver (20).

6. Optical fiber sensor according to one of the preceding claims, wherein a second optical transmitter (15) is provided for the generation of the optical reference signal.

7. Optical fiber sensor according to one of the preceding claims, wherein the optical reference signal comprises another modulation frequency than the optical measurement signal.

8. Optical fiber sensor according to one of the preceding claims, wherein the modulation signal for the optical reference signal and the optical measurement signal comprise a sinusoidal or rectangular curve shape.

9. Optical fiber sensor according to one of the preceding claims, wherein the optical reference signal and/or the optical measurement signal comprises a wave length in the visible range.

10. Optical fiber sensor for temperature compensated measurement of a deformation in a mechanical component (5), comprising
a first measurement fiber'(10) which is connected at least at two points with the mechanical component (5) and is at least partially modified together with the mechanical component (5) in its length,
a second measurement fiber (11) which is either attached loosely to the mechanical component (5) or is connected at least at two points with the mechanical component (5) and is at least partially modified together with the mechanical component (5) in its length,
a first optical transmitter (14), fed from a signal generator (33) which generates a modulation signal with a modulation frequency, with downstream Y-coupler (21) for feeding of an optical measurement signal into the first measurement fiber (10) and into the second measurement fiber (11),
a first optical receiver (19) for reception of the measurement signal guided through the first measurement fiber (10),
a second optical receiver (20) for reception of the measurement signal guided through the second measurement fiber (11),
an electrical connection with two electrical lines different in length between the signal generator (33) and an evaluation unit (30, 31, 32), and
an evaluation unit (30, 31, 32)
which determines a first phase difference from the signals of the first optical receiver (19) and of the second optical receiver (20) while feeding measurement signals of the measurement fibers (10, 11),
which determines as well a second phase difference while feeding reference signals of the electrical connection and
which determines and outputs a measurement value from the first phase difference and the second phase difference.

11. Optical fiber sensor according to one of the preceding claims, wherein the measurement fibers (10, 11) are connected with the mechanical component (5) such that by a deformation of the mechanical component (5) the changes in length of the measurement fibers (10, 11) are opposite to each other.

12. Wind power plant comprising an optical fiber sensor according to one of the preceding claims for measurement of the deformation of at least one rotor blade.

## Revendications

1. Capteur à fibres optiques pour la mesure compensée en température d'une déformation dans une pièce mécanique (5) comprenant
- une première fibre de mesure (10) reliée au moins en deux points à la pièce mécanique (5) et dont la longueur change au moins en partie avec la pièce mécanique (5),
- une seconde fibre de mesure (11) fixée de façon amovible sur la pièce mécanique (5) ou reliée en au moins deux points à la pièce mécanique (5) et dont la longueur change au moins en partie avec la pièce mécanique (5),
- un premier émetteur optique (14), alimenté par un générateur de signal (33), qui émet un signal de modulation avec une fréquence de modulation, avec un coupleur en Y (21) en aval pour fournir un signal de mesure optique dans la première fibre de mesure (10) et dans la seconde fibre de mesure (11),
- un premier récepteur optique (19) pour recevoir le signal de mesure optique fourni par la première fibre de mesure (10),
- un second récepteur optique (20) pour recevoir le signal de mesure optique fourni par la seconde fibre de mesure (11),
- un moyen (15, 17, 18, 23) pour créer un signal de référence optique avec un coupleur en Y (22) en aval pour fournir le signal de référence dans la première fibre de référence (12) et dans la seconde fibre de référence (13), la première fibre de référence (12) et la seconde fibre de référence (13) ayant des longueurs différentes et les signaux de sortie de la première fibre de référence (12) étant amenés à un premier récepteur optique de référence (19) et ceux de la seconde fibre de référence (13) à un second récepteur optique de référence (20), et
- une unité d'évaluation (30, 31, 32) qui détermine une première différence de phase à partir des signaux du premier récepteur optique (19) et du second récepteur optique (20) lors de la transmission de signaux de mesure à partir des fibres de mesure (10, 11) ainsi qu'une seconde différence de phase lors de la transmission de signaux de référence des fibres de référence (12, 13) et qui détermine et émet une valeur de mesure à partir de la première différence de phase et de la seconde différence de phase.

2. Capteur à fibres optiques selon la revendication 1, dans lequel les fibres de mesure (10, 11) et les fibres de référence (12, 13) sont couplées thermiquement les unes aux autres et/ou indiquent approximativement la même température.

3. Capteur à fibres optiques selon l'une des revendications précédentes, dans lequel la première fibre de mesure (10) et la seconde fibre de mesure (11) présentent approximativement la même longueur.

4. Capteur à fibres optiques selon l'une des revendications précédentes, dans lequel la première fibre de référence (12) et la seconde fibre de référence (13) présentent une différence de longueur prédéfinie.

5. Capteur à fibres optiques selon l'une des revendications précédentes, dans lequel le premier récepteur optique (19) est également le premier récepteur optique de référence (19) et le second récepteur optique (20) est également le second récepteur optique de référence (20).

6. Capteur à fibres optiques selon l'une des revendications précédentes, dans lequel un second émetteur optique (15) est prévu pour créer le signal de référence optique.

7. Capteur à fibres optiques selon l'une des revendications précédentes, dans lequel le signal de référence optique indique une autre fréquence de modulation que le signal de mesure optique.

8. Capteur à fibres optiques selon l'une des revendications précédentes, dans lequel le signal de modulation pour le signal de référence optique et le signal de mesure optique présentent une forme d'onde sinusoïdal ou rectangulaire.

9. Capteur à fibres optiques selon l'une des revendications précédentes, dans lequel le signal de référence optique et/ou le signal de mesure optique présente une longueur d'onde dans le spectre visible.

10. Capteur à fibres optiques pour la mesure compensée en température d'une déformation dans une pièce mécanique (5) comprenant
- une première fibre de mesure (10) reliée au moins en deux points à la pièce mécanique (5) et dont la longueur change au moins en partie avec la pièce mécanique (5),
- une seconde fibre de mesure (11) fixée de façon amovible sur la pièce mécanique (5) ou reliée en au moins deux points à la pièce mécanique (5) et dont la longueur change au moins en partie avec la pièce mécanique (5),
- un premier émetteur optique (14), alimenté par un générateur de signal (33), qui émet un signal de modulation avec une fréquence de modulation, avec un coupleur en Y (21) en aval pour fournir un signal de mesure optique dans la première fibre de mesure (10) et dans la seconde fibre de mesure (11),
- un premier récepteur optique (19) pour recevoir le signal de mesure optique fourni par la première fibre de mesure (10),
- un second récepteur optique (20) pour recevoir le signal de mesure optique fourni par la seconde fibre de mesure (11),
- une liaison électrique au moyen de deux câbles électriques de longueur différente entre le générateur de signal (33) et une unité d'évaluation (30, 31, 32) prévue, et
- une unité d'évaluation (30, 31, 32) qui détermine une première différence de phase à partir des signaux du premier récepteur optique (19) et du second récepteur optique (20) lors de la transmission de signaux de mesure à partir des fibres de mesure (10, 11) ainsi qu'une seconde différence de phase lors de la transmission de signaux de référence des fibres de référence (12, 13) et qui détermine et émet une valeur de mesure à partir de la première différence de phase et de la seconde différence de phase.

11. Capteur à fibres optiques selon l'une des revendications précédentes, dans lequel les fibres de mesure (10, 11) sont liés à la pièce mécanique (5) de telle sorte que, lors d'une déformation de la pièce mécanique (5), les variations de longueur des fibres de mesure (10, 11) soient opposées.

12. Installation éolienne comprenant un capteur à fibres optiques selon l'une des revendications précédentes pour mesurer la déformation d'au moins une pale de rotor.
